# EUROPEAN PATENT APPLICATION

(11) **EP 3 249 598 A1**
(43) Date of publication of application: **29.11.2017**
(21) Application number: 16202892.2
(22) Date of filing: 08.12.2016
(51) Int. Cl.: G06Q 30/06, G06Q 30/02

(54) **PROGRAM, PRODUCT RECOMMENDATION SYSTEM, AND PRODUCT RECOMMENDATION METHOD**

(30) Priority: 23.05.2016 JP 2016102415
(71) Applicant: Fuji Xerox Co., Ltd., Minato-ku, Tokyo (JP)
(72) Inventor: IZUMO, Hidetaka, Yokohama-shi, Kanagawa (JP); SATO, Masahiro, Yokohama-shi, Kanagawa (JP); SONODA, Takashi, Yokohama-shi, Kanagawa (JP)
(74) Representative: Ward, James Norman

(57) **Abstract**

A program causes a computer to execute a process including: extracting a consumer, from among plural consumers, whose degree of being influenced by recommendation for a specific product satisfies a predetermined condition; and recommending the specific product to the extracted consumer.

## Description

### CROSS-REFERENCE TO RELATED APPLICATIONS

This application is based on and claims priority under USC 119 from Japanese Patent Application No. 2016-102415, filed on May 23, 2016.

### BACKGROUND

### Technical Field

The present invention relates to a program, a product recommendation system, and a product recommendation method.

### Related Art

For example, JP-A-2010-61601 discloses a recommendation device which specifies an item to be recommended to a user by adjusting weights of respective attributes, elements, and the like which form the tastes of the user according to the details of a user operation.

### SUMMARY

There is a case where a product is recommended to a consumer based on a preference distribution and a purchase history of the consumer. In the case where a product is recommended to a consumer as described above, there may be a consumer whose purchase intention for a product becomes stronger when the product is recommended while there may be an unresponsive consumer whose purchase intention for the product does not become stronger even when the product is recommended. It is desired to perform recommendation to a consumer whose product purchase intention becomes stronger as a result of the recommendation.

An object of at least embodiments of the present invention is to increase the effect of recommendation for a product which causes a consumer to purchase the product compared to a case where the product is recommended without taking the degree of being influenced by the recommendation for the product into consideration.
[1] According to an aspect of the invention, there is provided a program causing a computer to execute a process including: extracting a consumer, from among plural consumers, whose degree of being influenced by recommendation for a specific product satisfies a predetermined condition; and recommending the specific product to the extracted consumer.
[2] In the program according to [1], the process further may include calculating the degree of being influenced based on a difference between a number of purchase of the specific product performed by consumers to which the specific product is recommended and the number of purchases of the specific product performed by consumers to which the specific product is not recommended.
[3] In the program according to [1] or [2], the recommending may include, in a case where a correlation between the specific product and other product satisfies a predetermined condition, recommending the other product together with the specific product to the extracted consumer.
[4] In the program according to [1] or [2], the extracting may include extracting a consumer for each product, and the recommending includes, in a case where a common consumer is extracted for plural products, recommending the plural products to the extracted common consumer.
[5] In the program according to [4], the recommending may include, in a case where a common consumer may be extracted for plural products among which a correlation satisfies a predetermined condition, recommending a part of the plural products to the extracted common consumer.
[6] According to another aspect of the invention, there is provided a program causing a computer to execute a process including: extracting a product, from among plural products, for which a degree of influence of recommendation to a specific consumer satisfies a predetermined condition; and recommending the extracted product to the specific consumer.
[7] According to another aspect of the invention, there is provided a product recommendation system including: an extraction unit that extracts a consumer, from among plural consumers, whose degree of being influenced by recommendation for a specific product satisfies a predetermined condition; and a recommendation unit that recommends the specific product to the extracted consumer.
[8] In the product recommendation system according to [7], the recommendation unit may recommend the specific product by forming an image concerning the specific product on a recording material as an output.
[9] According to another aspect of the invention, there is provided a product recommendation method including: extracting a consumer, from among plural consumers, whose degree of being influenced by recommendation for a specific product satisfies a predetermined condition; and recommending the specific product to the extracted consumer.

According to the program of [1], it is possible to increase the effect of recommendation for a product which causes consumers to purchase the product compared to a case where the product is recommended without taking the degree of being influenced by the recommendation for the product into consideration.

According to the program of [2], it is possible to easily calculate the degree of being influenced by the recommendation for the product.

According to the program of [3], it is possible to collectively recommend plural products that tend to be purchased together.

According to the program of [4], it is possible to recommend the plural products for which the effect of recommendation on a common consumer is high compared to a case where the products are recommended without taking the degree of being influenced by the recommendation for the products into consideration.

According to the program of [5], in a case where the plural products tend to be purchased individually, it is possible to recommend some of the plural products.

According to the program of [6], it is possible to increase the effect of recommendation to a consumer which causes the consumer to purchase a product compared to the case where the consumer is recommended without taking the degree of influence by the recommendation for the product to the consumer into consideration.

According to the product recommendation system of [7], it is possible to increase the effect of recommendation for a product which causes the consumers to purchase the product compared to the case where the product is recommended without taking the degree of being influenced by recommendation for the product into consideration.

According to the product recommendation system of [8], it is possible to distribute recording materials on which an image of a product to be recommended is formed to consumers.

According to the product recommendation method of [9], it is possible to increase the effect of recommendation for a product which causes the consumers to purchase the product compared to the case where the product is recommended without taking the degree of being influenced by recommendation for the product into consideration.

### BRIEF DESCRIPTION OF THE DRAWINGS

Exemplary embodiment(s) of the present invention will be described in detail based on the following figures, wherein:
Fig. 1 is a diagram illustrating an example of a hardware configuration of a product recommendation device according to an exemplary embodiment;
Fig. 2 is a block diagram illustrating an example of a functional configuration of the product recommendation device according to the exemplary embodiment;
Figs 3A and 3B are graphs illustrating examples of a correlation between the number of purchases for a target product within a recommendation period and a degree of preference for recommended consumers and non-recommended consumers;
Fig. 4 is a graph illustrating an example of an improvement degree of the number of purchases;
Fig. 5 is a graph illustrating an example of the relationship between the degree of preference and the improvement degree of the number of purchases;
Fig. 6 is a flowchart illustrating an example of a procedure of a process in which the product recommendation device selects consumers to which the target product is recommended;
Fig. 7 is a graph illustrating another example 1 of the procedure of selecting the consumers to which the target product is recommended;
Fig. 8 is a graph illustrating another example 2 of the procedure of selecting the consumers to which the target product is recommended;
Figs 9A and 9B are graphs illustrating an example of a case in which a common consumer for plural target products is selected;
Fig. 10 is a graph illustrating an example of two target products which have negative correlation between purchase ratios;
Fig. 11 is a graph illustrating a detailed example of two target products which have negative correlation between purchase ratios;
Fig. 12 is a graph illustrating an example of two target products which have positive correlation between purchase ratios;
Fig. 13 is a graph illustrating a detailed example of two target products which have positive correlation between purchase ratios; and
Fig. 14 is a diagram illustrating an example of a hardware configuration of an image forming apparatus to which the exemplary embodiment may be applied.

### DETAILED DESCRIPTION

Hereinafter, an exemplary embodiment of the present invention will be described in detail with reference to the accompanying drawings.

### <Example of Hardware Configuration of Product Recommendation Device>

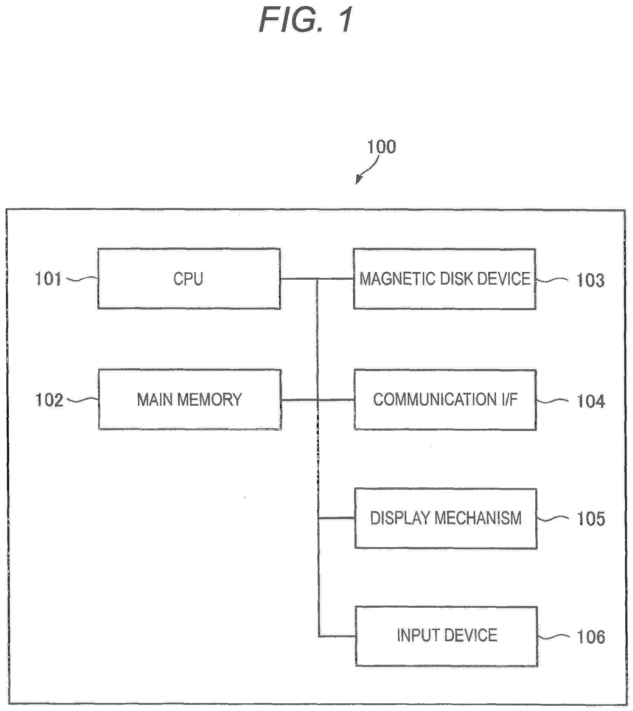

First, a hardware configuration of a product recommendation device 100 according to an exemplary embodiment will be described. Fig. 1 is a diagram illustrating an example of the hardware configuration of the product recommendation device 100 according to the exemplary embodiment.

The product recommendation device 100 according to the exemplary embodiment is an example of a product recommendation system, and is, for example, a computer apparatus which is used to recommend a product to consumer in a retail trade or the like.

As illustrated in the drawing, the product recommendation device 100 includes a Central Processing Unit (CPU) 101 which is an arithmetic operation unit, a main memory 102 which is a storage unit, and a magnetic disk device 103.

Here, the CPU 101 executes various programs, such as an Operating System (OS) and an application program, and realizes various functions of the product recommendation device 100. In addition, the main memory 102 is a storage area which stores the various programs, data used for the execution of the programs, and the like. In addition, a magnetic disk device 103 is a storage area which stores input data for the various programs, output data from the various programs, and the like.

Furthermore, the product recommendation device 100 includes a communication interface (communication I/F) 104 which performs communication with the outside, a display mechanism 105 which includes a video memory, a display, and the like, and an input device 106 such as a keyboard, a mouse, or the like.

### <Functional Configuration of Product Recommendation Device>

Subsequently, a functional configuration of the product recommendation device 100 according to the exemplary embodiment will be described.

In the exemplary embodiment, first, for example, a retail trader who sells a product at a storefront of a supermarket, a retail trader who performs mail-order selling on the Internet, or the like recommends the product to a consumer by actually delivering an advertisement at the storefront or distributing the advertisement via the Internet. Here, recommendation of the product may be performed using an existing method. For example, a recommendation of a highly ranked best-selling product is performed based on a sales history of the product, a history of access to a Web (World Wide Web) site on the Internet, or the like, or the product is recommended through cooperative filtering. The cooperative filtering is performed by recording the preference of a consumer as an action in the past, and estimating the preference of the consumer based on preference information of another consumer who takes action which is similar to the consumer.

After recommendation is performed in advance using the existing method, the product recommendation device 100 selects a target product which will be recommended to the consumer again (hereinafter, referred to as a target product) from among products which are recommended in advance. Furthermore, the product recommendation device 100 selects a consumer to which the selected target product should be recommended based on the result of recommendation performed in advance using the existing method.

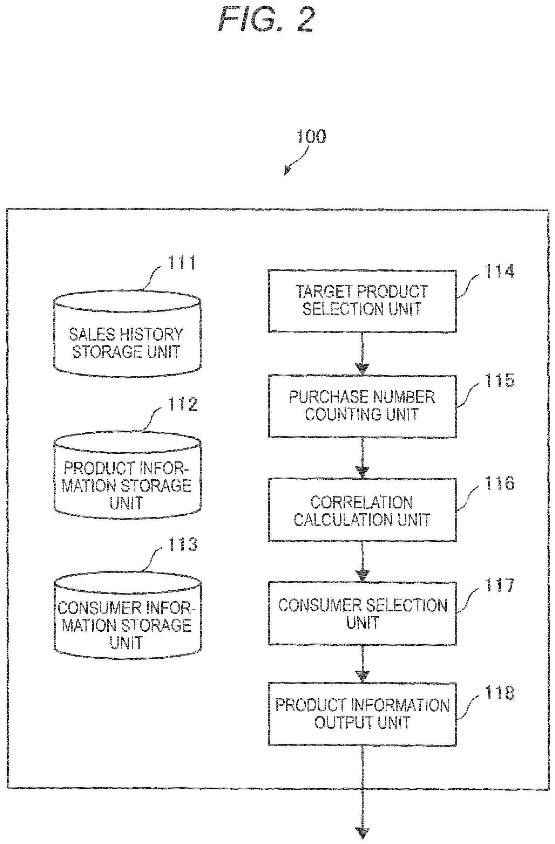

Fig. 2 is a block diagram illustrating an example of a functional configuration of the product recommendation device 100 according to the exemplary embodiment. The product recommendation device 100 includes a sales history storage unit 111 which stores the sales history of the product, a product information storage unit 112 which stores various pieces of information related to the product, and a consumer information storage unit 113 which stores various pieces of information related to the consumer.

In addition, the product recommendation device 100 includes a target product selection unit 114 which selects the target product from among the products which are recommended in advance using the existing method, a purchase number counting unit 115 which counts the number of purchases for the target product, and a correlation calculation unit 116 which calculates the correlation between the number of purchases for the target product and the degree of preference which will be described later. Furthermore, the product recommendation device 100 includes a consumer selection unit 117 which selects the consumer to which the target product is recommended, and a product information output unit 118 which outputs information of the target product to the selected consumer.

The sales history storage unit 111 stores the sales history of the product. The sales history indicates a sales record related to each of plural products which are sold in the past, and includes, for example, pieces of information such as the number of products which are purchased by the consumer and the number of consumers who purchased the product. More specifically, for example, it is possible to exemplify the sales record related to various products, such as food and daily necessities which are sold at the storefront of the supermarket or a Web site of the Internet. Meanwhile, although the sales history may be provided for one store, the sales history may indicate records of sales performed at plural stores or plural different companies.

The product information storage unit 112 stores various pieces of information related to the product. More specifically, the product information storage unit 112 stores, for example, pieces of information, such as a product name, product explanation, a product price, and a product image for each product with regard to a product which is sold in the past, a product which is scheduled to be sold in the future. In addition, the product information storage unit 112 may store pieces of information such as a classification spot, at which a product is classified, and the type of the product.

The consumer information storage unit 113 stores various pieces of information related to the consumer. More specifically, the consumer information storage unit 113 stores, for example, pieces of information of the consumer who purchases the product at the storefront or via the Web site, and a consumer who is registered as a member of the Web site. It is possible to exemplify, for example, a transaction history of a transaction performed by the consumer, the attributes of the consumer, such as age and sex, and information of a questionnaire performed for the consumer up to now as the pieces of information of the consumer to be stored. In addition, the various pieces of information related to the consumer are used to calculate the degree of preference which will be described later.

The target product selection unit 114 selects a target product from among products which are recommended in advance using the existing method. Here, in a case in which a user designates a product by performing operational input using, for example, the input device 106, the target product selection unit 114 selects the product which is designated by the user as the target product. In addition, the target product selection unit 114 may specify products which are recommended in advance using the existing method based on, for example, pieces of information which are stored in the sales history storage unit 111 and the product information storage unit 112, and may select a product, which satisfies a predetermined reference, from among the specified products as the target product. It is possible to exemplify, for example, a product in which the total number of purchases is equal to or larger than a threshold, and a product in which the number of purchasers is equal to or larger than a threshold as the product which satisfies the predetermined reference.

The purchase number counting unit 115 extracts a consumer on which recommendation of the target product is performed in advance using the existing method (hereinafter, referred to as a recommended consumer) and a consumer on which recommendation of the target product is not performed in advance (hereinafter, referred to as a non-recommended consumer) based on the pieces of information which are stored in the sales history storage unit 111 and the consumer information storage unit 113. Furthermore, the purchase number counting unit 115 counts the number of purchases, in which the recommended consumer purchases the target product within a period in which the target product is recommended in advance using the existing method (hereinafter, referred to as a recommendation period), and the number of purchases, in which the non-recommended consumer purchases the target product within recommendation period, for each of the consumers.

More specifically, the purchase number counting unit 115 extracts recommended consumers and non-recommended consumers by a predetermined number of people (for example, 500 people) based on the pieces of information which are stored in the sales history storage unit 111 and the consumer information storage unit 113. In this case, the purchase number counting unit 115 counts the number of purchases in which the extracted recommended consumers, that is, 500 people, purchase the target product within recommendation period and the number of purchases in which the extracted non-recommended consumers, that is, 500 people, purchase the target product within recommendation period for the respective consumers.

Here, the purchase number counting unit 115 may randomly extract the recommended consumers and the non-recommended consumers or may extract the recommended consumers and the non-recommended consumers from among the consumers who satisfy a predetermined condition. It is possible to exemplify, for example, a consumer in which the number of target products purchased in the past is equal to or larger than a threshold, a consumer who purchased the target product within the past one month, or the like as the consumers who satisfy the predetermined condition.

The correlation calculation unit 116 calculates a degree of preference, which indicates the degree of preference for the target product, for each consumer with regard to the recommended consumers and the non-recommended consumers who are extracted by the purchase number counting unit 115. Furthermore, the correlation calculation unit 116 calculates the correlation between the number of purchases and the degree of preference for the target product within the recommendation period for the recommended consumers. In addition, the correlation calculation unit 116 calculates the correlation between the number of purchases and the degree of preference for the target product within the recommendation period for the non-recommended consumers.

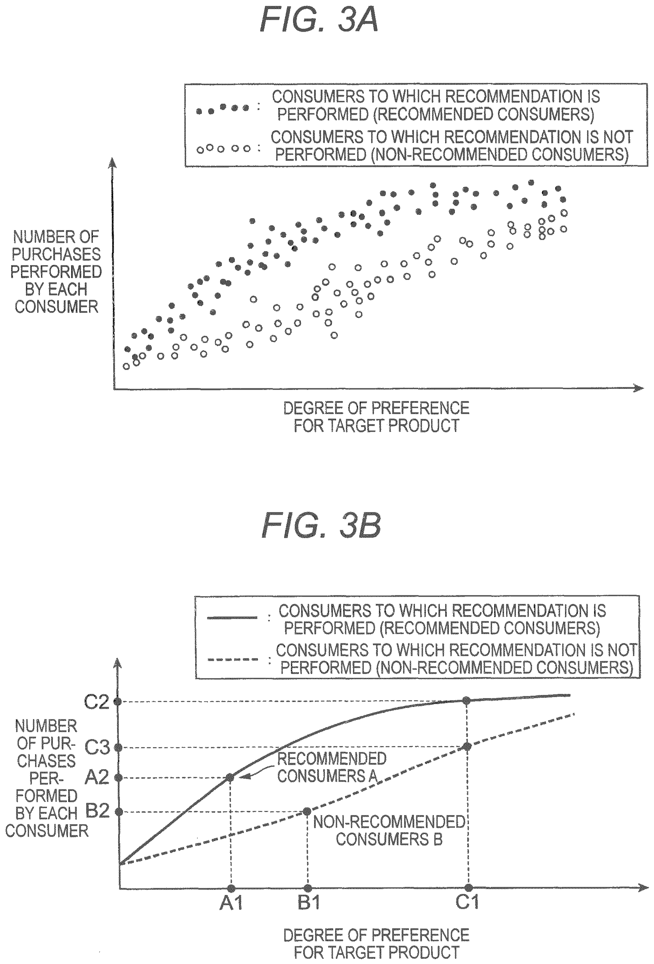

Figs 3A and 3B are graphs illustrating example of the correlation between the number of purchases and the degree of preference for the target product within the recommendation period for the recommended consumers and the non-recommended consumers. In the graphs illustrated in Figs 3A and 3B, a vertical axis indicates the number of purchases for the target product which is purchased by each consumer within the recommendation period. In addition, a horizontal axis indicates a degree of preference for the target product. Furthermore, the graph illustrated in Fig. 3A is acquired by plotting data of the recommended consumers and the non-recommended consumers for the respective consumers. That is, the recommended consumers and the non-recommended consumers are plotted according to the degree of preference. In addition, the graph illustrated in Fig. 3B is a regression curve which is generated through, for example, a least-squares method or the like based on the data illustrated in Fig. 3A.

For example, the degree of preference for the target product for a recommended consumer A illustrated in Fig. 3B is A1, and the number of purchases for the target product within the recommendation period is A2. In addition, for example, the degree of preference for the target product for a non-recommended consumer B illustrated in Fig. 3B is B1, and the number of purchases for the target product within the recommendation period is B2. Furthermore, for example, in a case in which the degree of preference is C1, the number of purchases for the target product performed by the recommended consumer is C2, and the number of purchases for the target product performed by the non-recommended consumer is C3.

In this manner, the correlation calculation unit 116 calculates the correlation between the number of purchases and the degree of preference for the target product within the recommendation period for the recommended consumer and the non-recommended consumer.

Meanwhile, the degree of preference is calculated based on various pieces of information which are stored in the sales history storage unit 111, the product information storage unit 112, and the consumer information storage unit 113. More specifically, for example, based on the information of sales history which is stored in the sales history storage unit 111, the degree of preference for a certain product is calculated by increasing the degree of preference of the consumer as the number of purchases performed by the consumer is large and by increasing the degree of preference of the consumer as the frequency of purchases performed by the consumer is high. Meanwhile, the number of purchases for the product may be used as the degree of preference.

In addition, for example, based on the information of the sales history which is stored in the sales history storage unit 111, the degree of preference may be calculated using the above-described cooperative filtering technology. In this case, for example, first, the degree of similarity of each consumer is calculated through the cooperative filtering. Furthermore, for example, in a case in which one consumer is similar to another consumer, the degree of preference is calculated by estimating that a product in which the degree of preference is high for the one consumer has the high degree of preference for another consumer.

Furthermore, for example, the degree of preference may be calculated based on the attributes of the consumer and the degree of similarity of the product. For example, in a case in which the degree of preference is calculated based on the attributes of the consumer, each consumer is grouped according to pieces of information, such as the age, sex, and address of the consumer, which is stored in the consumer information storage unit 113. Furthermore, for example, the degree of preference for a product, which has a high degree of preference in the plural consumers in a group, is calculated while estimating that the degree of preference for the product is high in another consumer in the same group. In addition, for example, in a case in which the degree of preference is calculated based on the degree of similarity of the product, the degree of similarity of each product is calculated based on information of the product which is stored in the product information storage unit 112. Furthermore, for example, in a case in which one product is similar to another product, the degree of preference is calculated by estimating that a consumer who has a high degree of preference for one product has a high degree of preference for another product.

The consumer selection unit 117 as an example of an extraction unit selects consumers, to which the target product is recommended, based on the correlation calculated by the correlation calculation unit 116. A procedure of selecting the consumers will be described later in detail.

The product information output unit 118 as an example of a recommendation unit outputs pieces of information of the target product while targeting the consumers selected by the consumer selection unit 117. Here, the product information output unit 118 acquires the pieces of information of the target product from the product information storage unit 112. Furthermore, in a case in which the product information output unit 118 transmits the acquired pieces of information of the target product to terminal devices, which are possessed by the consumers selected by the consumer selection unit 117 through, for example, a network which is not illustrated in the drawing, recommendation of the target product is performed.

Meanwhile, each of the functional units, which form the product recommendation device 100 illustrated in Fig. 2, is realized in such a way that software and hardware resources work together. Specifically, in a case in which the CPU 101 reads programs which realize the target product selection unit 114, the purchase number counting unit 115, the correlation calculation unit 116, the consumer selection unit 117, the product information output unit 118, and the like from, for example, the magnetic disk device 103 and executes the programs in the main memory 102, the functional units are realized. In addition, the sales history storage unit 111, the product information storage unit 112, and the consumer information storage unit 113 are realized by, for example, the magnetic disk device 103.

### <Explanation of Consumer Selection Procedure>

Subsequently, a procedure in which the consumer selection unit 117 selects the consumers to which the target product is recommended will be described in detail.

First, the consumer selection unit 117 calculates the difference between the number of purchases performed by the recommended consumers and the number of purchases performed by the non-recommended consumers within the recommendation period based on the correlation calculated by the correlation calculation unit 116. Moreover, the difference between the numbers of purchases is a value acquired by subtracting the number of purchases performed by the non-recommended consumers from the number of purchases performed by the recommended consumers within the recommendation period for the recommended consumers and the non-recommended consumers which have the same degree of preference. It is possible to understand the value as the amount of increase (improvement degree) in the number of purchases acquired by recommending the target product, and, hereinafter, there is a case of being referred to as "the improvement degree of the number of purchases". In the exemplary embodiment, the improvement degree of the number of purchases is used as an example of the degree of influence attributable to recommendation.

In addition, as the improvement degree of the number of purchases is large, the amount of increase in the number of purchases attributable to recommendation of the target product is large. Therefore, the buying intention of a consumer who has a degree of preference near the maximum of the improvement degree of the number of purchases increases by recommending the target product, and it is expected that the consumer purchases the more number of target products. Here, in the exemplary embodiment, the consumer selection unit 117 selects the consumer as a consumer to which the target product should be recommended.

More specifically, for example, with regard to consumers in which various pieces of information are stored in the consumer information storage unit 113, the consumer selection unit 117 calculates the degrees of preference of the respective consumers. Furthermore, the consumer selection unit 117 selects the consumer who has the degree of preference near the maximum of the improvement degree of the number of purchases as the consumer in which the target product should be recommended from among consumers in which the degree of preference is calculated. Here, it is possible to exemplify the degree of preference near the maximum of the improvement degree of the number of purchases as, for example, the degree of preference within a predetermined range from the degree of preference in which the improvement degree of the number of purchases becomes the maximum.

Here, although the consumer selection unit 117 selects the consumer in which the target product should be recommended from among the consumers whose various pieces of information are stored in the consumer information storage unit 113, the present invention may not be limited to the configuration. For example, the consumer selection unit 117 may limit the recommended consumers and the non-recommended consumers, and may select the consumer in which the target product should be recommended from among the consumers.

Meanwhile, in the exemplary embodiment, the consumer who has the degree of preference near the maximum of the improvement degree of the number of purchases is used as an example of a consumer in which the degree of influence satisfies the predetermined condition.

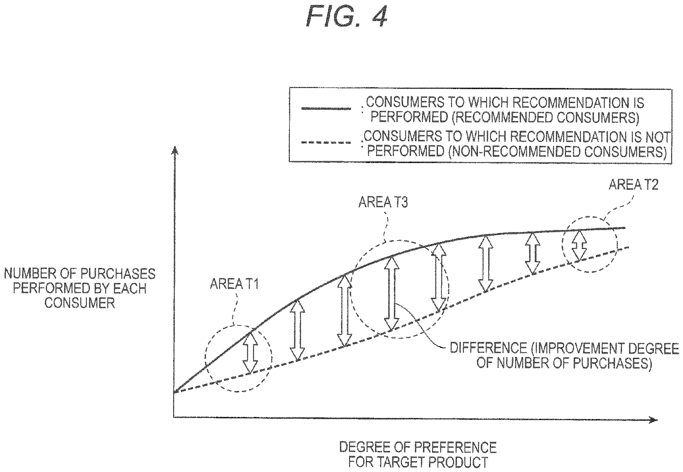

Fig. 4 is a graph illustrating an example of the improvement degree of the number of purchases.

In the graph illustrated in Fig. 4, a vertical axis indicates the number of purchases for the target product purchased by each consumer within the recommendation period. In addition, a horizontal axis indicates the degree of preference for the target product. Furthermore, Fig. 4 illustrates the regression curve which expresses the correlation between the number of purchases performed by the recommended consumers and the degree of preference, and the regressive curve which expresses the correlation between the number of purchases performed by the non-recommended consumers and the degree of preference. For example, the improvement degree of the number of purchases in an area T3 is large, compared to the improvement degree of the number of purchases in an area T1 and an area T2.

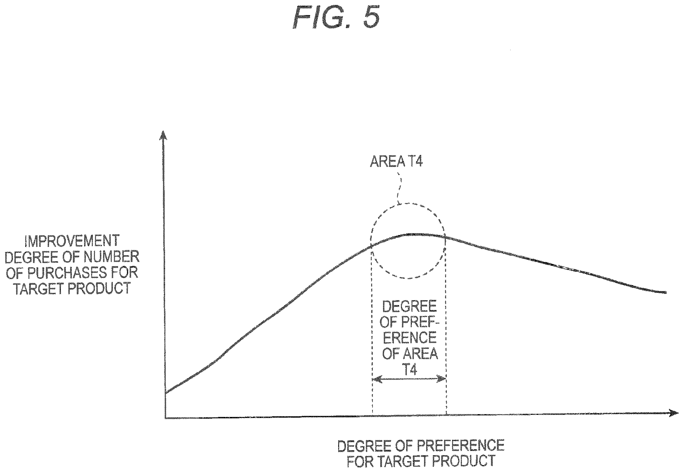

In addition, Fig. 5 is a graph illustrating an example of the relationship between the degree of preference and the improvement degree of the number of purchases. In the graph illustrated in Fig. 5, a vertical axis indicates the improvement degree of the number of purchases for the target product, and a horizontal axis indicates the degree of preference for the target product. In addition, for example, the graph illustrated in Fig. 5 is generated by subtracting the value of the regression curve of the non-recommended consumers from the value of the regression curve of the recommended consumers illustrated in Fig. 4. In the example illustrated in Fig. 5, an area T4 is an area near the maximum of the improvement degree of the number of purchases. Therefore, the consumer selection unit 117 specifies the degree of preference of the area T4. Furthermore, the consumer selection unit 117 calculates the degree of preference for each consumer whose various pieces of information are stored in the consumer information storage unit 113, and selects a consumer who has the degree of preference in the area T4.

Meanwhile, the improvement degree of the number of purchases may be an index which is related to the amount of increase in the number of purchases attributable to recommendation of the target product, and is not limited to the difference between the number of purchases performed by the recommended consumers and the number of purchases performed by the non-recommended consumers within the recommendation period. For example, it is assumed that the difference between the number of purchases performed by the recommended consumers within a fixed period before the recommendation period and the number of purchases performed by the recommended consumers within the fixed period during the recommendation period is the improvement degree of the recommended consumers. In addition, it is assumed that the difference between the number of purchases performed by the non-recommended consumers within the fixed period before the recommendation period and the number of purchases performed by the non-recommended consumers within the fixed period during the recommendation period is the improvement degree of the non-recommended consumers. Furthermore, a value acquired by subtracting the improvement degree of the non-recommended consumers from the improvement degree of the recommended consumers may be used as the improvement degree of the number of purchases.

### <Procedure of Process of Selecting Consumers to Which Target Product Is Recommended>

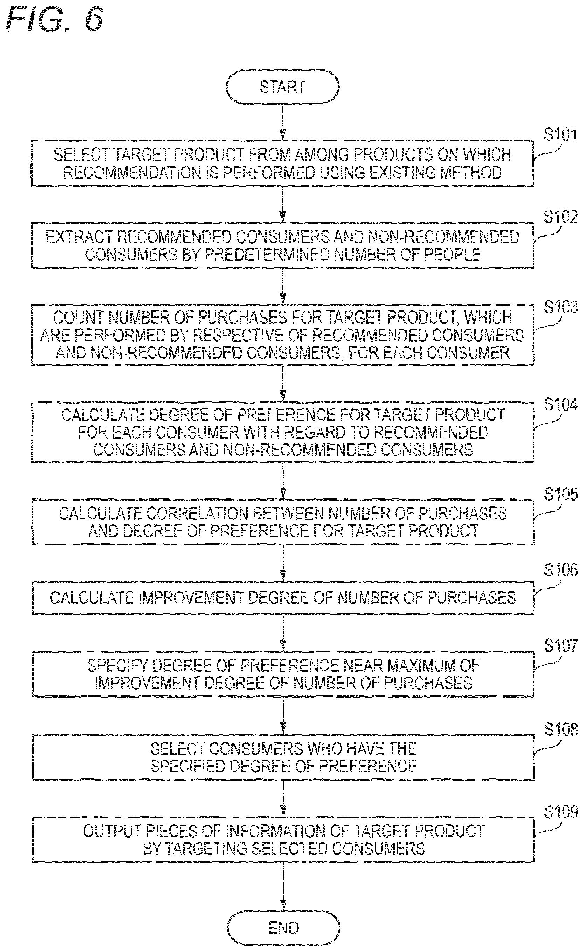

Subsequently, a procedure of a process, in which the product recommendation device 100 according to the exemplary embodiment selects the consumers to which the target product is recommended, will be described. Fig. 6 is a flowchart illustrating an example of the procedure of the process in which the product recommendation device 100 selects consumers to which the target product is recommended. Here, description will be performed in such a way that recommendation of the products is performed in advance using an existing method.

First, the target product selection unit 114 selects a target product from the products for which recommendation is performed in advance using the existing method (step 101). Subsequently, the purchase number counting unit 115 extracts the recommended consumers and the non-recommended consumers by a predetermined number of people based on the pieces of information which are stored in the sales history storage unit 111 and the consumer information storage unit 113 (step 102). Subsequently, the purchase number counting unit 115 counts the number of purchases, which is acquired in such a way that the respective of extracted recommended consumers and non-recommended consumers purchase the target product within the recommendation period, for each consumer (step 103).

Subsequently, the correlation calculation unit 116 calculates the degree of preference for the target product for each consumer with regard to the recommended consumers and the non-recommended consumers (step 104). Subsequently, the correlation calculation unit 116 calculates the correlation between the number of purchases and the degree of preference for the target product within the recommendation period for the recommended consumers and the non-recommended consumers (step 105). In step 105, for example, as illustrated in Fig. 3B, the correlation calculation unit 116 calculates the regression curve, which expresses the correlation between the number of purchases performed by the recommended consumers and the degree of preference, and the regression curve, which expresses the correlation between the number of purchases performed by the non-recommended consumers and the degree of preference. Subsequently, the consumer selection unit 117 calculates the improvement degree of the number of purchases based on the correlation calculated by the correlation calculation unit 116 (step 106). Subsequently, the consumer selection unit 117 specifies the degree of preference near the maximum of the improvement degree of the number of purchases (step 107).

Subsequently, the consumer selection unit 117 selects consumers who have the specified degree of preference from among the consumers whose various pieces of information are stored in the consumer information storage unit 113 (step 108). In step 108, the consumer selection unit 117 calculates the degree of preference for the target product for the respective consumers whose various pieces of information are stored in the consumer information storage unit 113. Furthermore, the consumers who have the specified degree of preference are selected from among the consumers whose degrees of preference are calculated. Subsequently, the product information output unit 118 outputs the information of the target product by targeting the consumers who are selected by the consumer selection unit 117 (step 109). Thereafter, the flow of the process ends. Meanwhile, in a case in which there is another product in which recommendation is performed in advance using the existing method, the target product selection unit 114 may continuously select the target product, and may repeatedly perform the processes in steps 101 to 109.

In addition, in the above-described example, the degree of preference is calculated in steps 104 and step 108. However, the present invention is not limited to the configuration. The degree of preference for each product may be periodically calculated by, for example, every month. In a case in which the degree of preference is calculated in advance in steps 104 and 108, the process may be performed using the degree of preference which is calculated in advance.

### <Description of Another Example 1 of Procedure of Selecting Consumers>

Subsequently, another example of a procedure of selecting the consumers to which the target product is recommended will be described. In the above-described example, the consumer selection unit 117 selects consumers by specifying the degree of preference near the maximum of the improvement degree of the number of purchases. Here, in a case in which there are two or more improvement degrees of the number of purchases, which exceed a predetermined threshold, the consumer selection unit 117 may select a consumer who has a higher degree of preference in order to select a consumer who has a possibility of loving the target product.

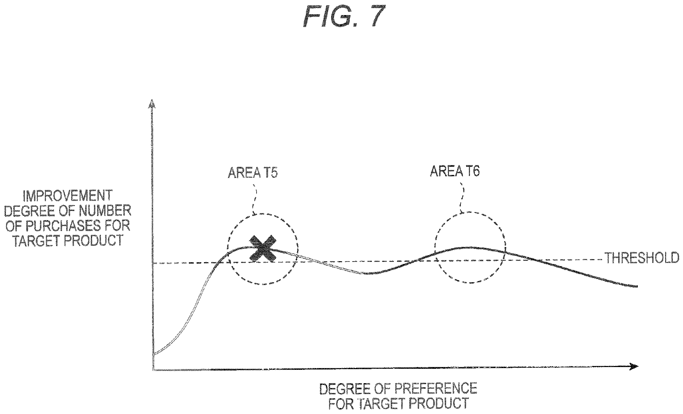

Fig. 7 is a graph illustrating another example 1 of the procedure of selecting the consumers to which the target product is recommended. In the graph illustrated in Fig. 7, a vertical axis indicates the improvement degree of the number of purchases for the target product, and a horizontal axis indicates the degree of preference for the target product. Furthermore, areas T5 and T6 are areas in which the improvement degree of the number of purchases exceeds the predetermined threshold. Here, the consumer selection unit 117 selects the area T6 whose degree of preference is higher from the areas T5 and T6. Furthermore, the consumer selection unit 117 selects consumers who have the degree of preference of area T6 as the consumers to which the target product is recommended.

Meanwhile, in the example, the consumer who has the higher degree of preference is selected in order to select a consumer who has the highest possibility of loving the target product. However, the present invention is not limited thereto. The consumer selection unit 117 may select a consumer who has a lower degree of preference (in the example illustrated in Fig. 7, the degree of preference of area T5) in order to pioneer new purchasers by arousing, for example, a demand of the consumer who has the lower degree of preference.

### <Description of Another Example 2 of Procedure of Selecting Consumers>

The consumer selection unit 117 may divide the consumers into plural groups, may calculate the relationship between the degree of preference and the improvement degree of the number of purchases for each group, and may select consumers by specifying the degree of preference near the maximum of the improvement degree of the number of purchases in plural groups.

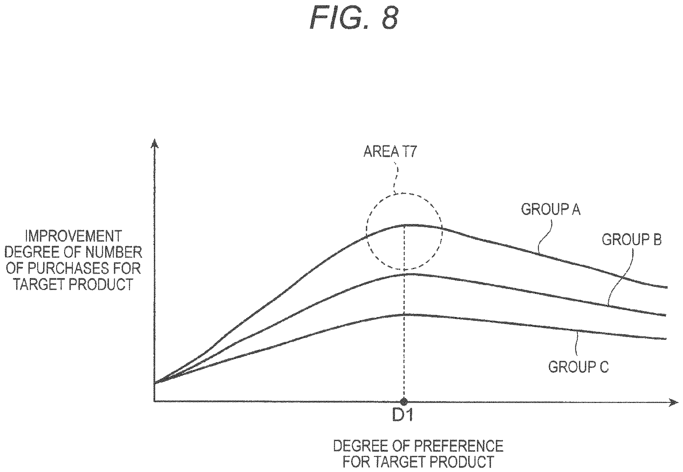

Fig. 8 is a graph illustrating another example 2 of the procedure of selecting the consumers to which the target product is recommended. In the graph illustrated in Fig. 8, a vertical axis indicates the improvement degree of the number of purchases for the target product, and a horizontal axis indicates the degree of preference for the target product. Furthermore, the consumers are divided into three groups, that is, a group A, a group B, and a group C, the relationship between the degree of preference and the improvement degree of the number of purchases is illustrated for each group. Here, in each group, improvement degree of the number of purchases becomes the maximum in a case in which the degree of preference is near to D1. However, the improvement degree of the number of purchases of group A is higher than the improvement degrees of the number of purchases of other groups. Here, the consumer selection unit 117 selects the area T7, in which the improvement degree of the number of purchases is the highest, from among a plurality of groups. Furthermore, the consumer selection unit 117 selects consumers who belong to the group A and have the degree of preference in the area T7 as the consumers to which the target product is recommended.

Here, plural groups are set based on, for example, the attributes, the purchase history, the recommendation history, or the like of each of the consumers. In addition, the recommended consumers and the non-recommended consumers are extracted by a predetermined number of people for every set group. Furthermore, as illustrated in Fig. 8, the relationship between the degree of preference and the improvement degree of the number of purchases is calculated for each group.

Meanwhile, in the example, the consumers who have the degree of preference in the area in which the improvement degree of the number of purchases is the highest from among plural groups are selected. However, the present invention is not limited to the configuration. The consumer selection unit 117 may select consumers for each group by specifying the degree of preference near the maximum or specifying the degree of preference in which the improvement degree of the number of purchases exceeds the predetermined threshold in, for example, each of plural groups. As described above, in a case in which consumers are selected for each group, the consumers in which the target product should be recommended are selected according to the attributes, the purchase history, and the recommendation history of the consumer.

### <Description of Another Example 1 of Procedure of Selecting Target Product>

Subsequently, another example 1 of a procedure of selecting a target product will be described.

In a case in which consumers are selected for each of plural target products, a case is conceivable in which a common consumer is selected for two or more target products. In this case, plural target products may be recommended to the selected consumer.

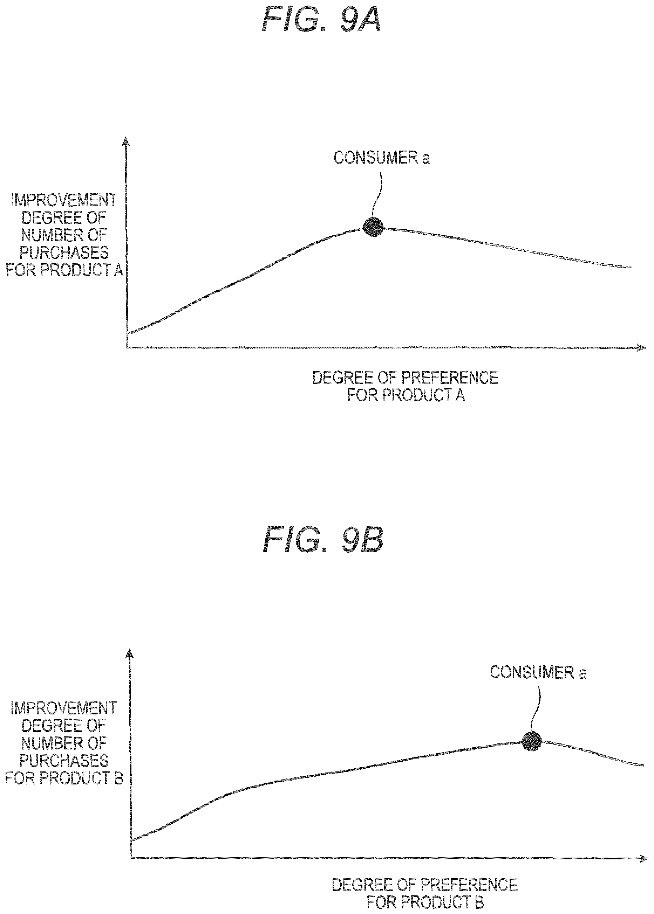

Figs 9A and 9B are graphs illustrating an example of a case in which a common consumer for plural target products is selected. In the example illustrated in the drawing, plural target products are described as a product A and a product B. Fig. 9A is a graph illustrating the relationship between the degree of preference and the improvement degree of the number of purchases for the product A. Fig. 9B is a graph illustrating the relationship between the degree of preference and the improvement degree of the number of purchases for the product B.

In the example illustrated in Fig. 9A, a consumer a is selected as the consumer who has the degree of preference near the maximum of the improvement degree of the number of purchases. In other words, the consumer a is selected as the consumer to which the product A is recommended. In addition, in the example illustrated in Fig. 9B, the consumer a is selected as the consumer who has the degree of preference near the maximum of the improvement degree of the number of purchases. In other words, the consumer a is selected as the consumer to which the product B is recommended. In this manner, both of the product A and the product B are recommended to the consumer a. Meanwhile, in the examples illustrated in Figs 9A and 9B, a case is illustrated in which plural target products are two. However, the plural target products may be three or more.

### <Description of Another Example 2 of Procedure of Selecting Target Product>

Similarly to another example 1 of the procedure of selecting the target product, a case is conceivable in which, even though plural target products are recommended to the common consumer, the effect of recommendation is not expected. For example, in a case in which the product A and the product B are similar and there is a small number of consumers who purchase the product A and the product B together, it is conceivable in which, even though both the product A and the product B are recommended to the common consumer, the effect of recommendation is not expected.

More specifically, in a case in which a purchase ratio of the product B lowers as a purchase ratio of the product A rises and thus the purchase ratios of the product A and the product B have a negative correlation (that is, a correlation coefficient is a negative value), it is conceivable that, even though both the product A and the product B are recommended to the common consumer, there is a low possibility that the consumer purchases the product A and the product B together, and thus the effect of recommendation is not expected. As described above, in a case in which the effect of recommendation is not expected even though the plural target products are recommended, the product information output unit 118 may select any one of the target products according to a predetermined reference and recommends the target product to the consumer.

Meanwhile, it is possible to exemplify that the case in which the purchase ratios of two products have the negative correlation is, for example, a case in which the correlation coefficient of the two purchase ratios is smaller than a predetermined value.

In addition, the purchase ratio of the product is, for example, a percentage of consumers who purchase the product from among all of the consumers who visit a supermarket or a Web site. It is assumed that the value of the purchase ratio is calculated, for example, every business day or every business hour, based on information which is stored in the sales history storage unit 111.

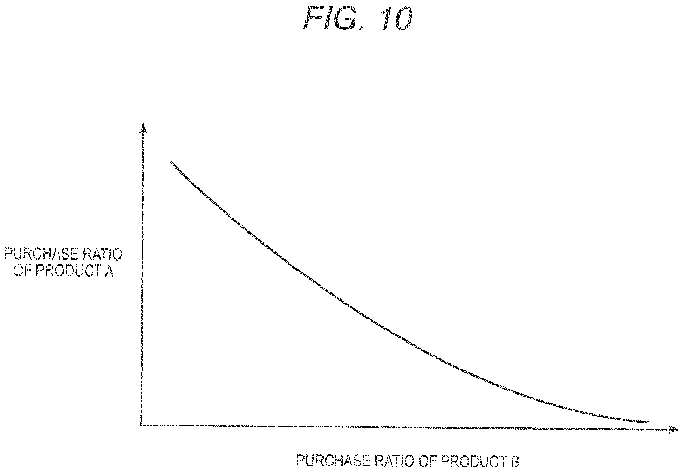

Fig. 10 is a graph illustrating an example of two target products which have negative correlation between the purchase ratios. In the graph illustrated in Fig. 10, a vertical axis indicates a purchase ratio of the product A, and a horizontal axis indicates a purchase ratio of the product B. In the example illustrated in the drawing, description is performed while assuming that the target product is sold in a supermarket. In this case, the purchase ratio of the product A is a percentage of the consumer who purchases the product A from among all of the consumers who visit the supermarket. In addition, the purchase ratio of the product B is a percentage of the consumer who purchases the product B from among all of the consumers who visit the supermarket. Furthermore, Fig. 10 illustrates that the purchase ratio of the product B lowers as the purchase ratio of the product A rises, and thus the purchase ratios of the product A and the product B have negative correlation.

In the case, the product information output unit 118 recommends any one target product of the product A and the product B according to the predetermined reference. It is possible to exemplify the predetermined reference including, for example, selection of a product in which a gross profit and a profit ratio is high, selection of a product in which the quantity of stock is large, and selection of a product in which recommendation cost is low.

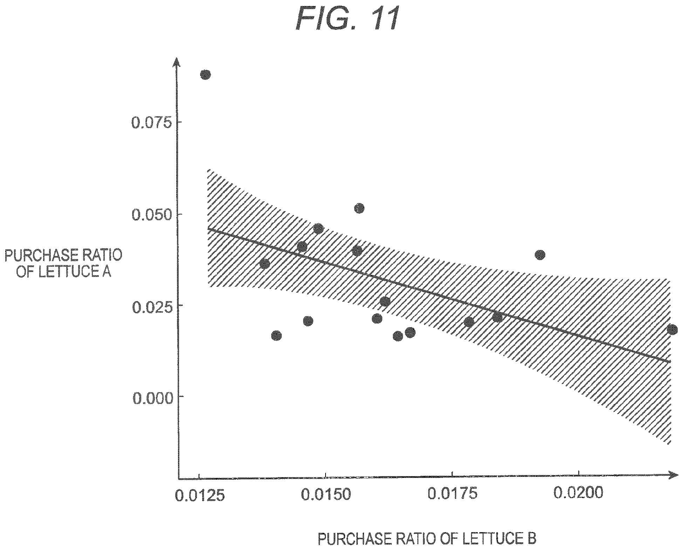

Fig. 11 is a graph illustrating a detailed example of two target products which have negative correlation between purchase ratios. In the graph illustrated in Fig. 11, a vertical axis indicates a purchase ratio of a lettuce A, and a horizontal axis indicates a purchase ratio of a lettuce B. As illustrated in the drawing, the purchase ratios of two target products express negative correlation. That is, the larger the number of consumers who purchase the lettuce B the smaller the number of consumers who purchase the lettuce A, and the larger the number of consumers who purchase the lettuce A the smaller the number of consumers who purchase the lettuce B. In the case, any one of the lettuce A and the lettuce B is recommended according to the predetermined reference.

Meanwhile, as described above, the value of the purchase ratio of each product is calculated, for example, every business day or every business hour. Furthermore, it is determined whether or not the purchase ratios of plural target products indicate negative correlation based on the calculated value of the purchase ratio. Here, with regard to each product, information of another product in which a purchase ratio indicates negative correlation may be set in advance. In this case, in a case in which plural target products are selected for the common consumer, the product information output unit 118 can determine whether or not the plural target products indicate negative correlation using the information which is set in advance.

In addition, here, a case in which the plural target products are two is described. However, the plural target products may be three or more. For example, in a case in which a product A, a product B, and a product C are recommended to the common consumer, all of the three products, two of the three products, or any one of the three products is recommended based on the correlation between the product A and the product B, the correlation between the product B and the product C, and the correlation between the product A and the product C.

### <Description of Another Example 3 of Procedure of Selecting Target Product>

In addition, if there is another product that tends to be purchased together with a target product in a case in which the target product is recommended, the product information output unit 118 may recommend another product together with the target product. More specifically, in a case in which the purchase ratio of another product rises as the purchase ratio of one product rises and thus the purchase ratios of one product and another product have positive correlation (that is, the correlation coefficient is positive), the product information output unit 118 may recommend another product together with the one product.

Meanwhile, it is possible to exemplify that a case in which the purchase ratios of the two products have positive correlation is, for example, a case in which the correlation coefficient of the purchase ratios of both of the products is larger than a predetermined value.

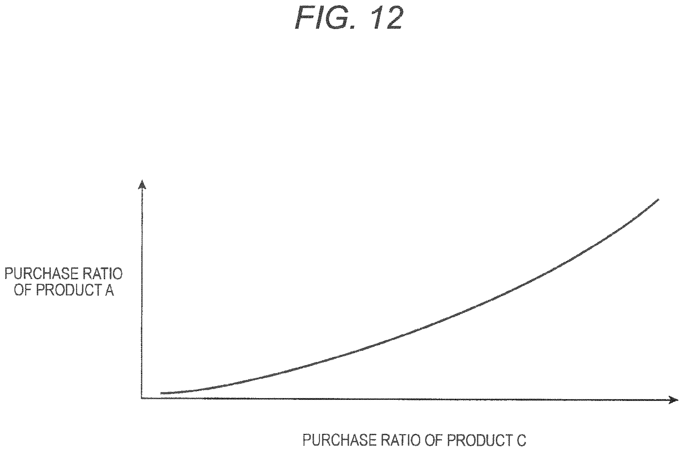

Fig. 12 is a graph illustrating an example of two target products which have positive correlation between purchase ratios. In the graph illustrated in Fig. 12, a vertical axis indicates the purchase ratio of the product A, and a horizontal axis indicates the purchase ratio of the product C. Here, Fig. 12 illustrates that the purchase ratio of the product C rises as the purchase ratio of the product A rises, and thus the purchase ratios of the product A and the product C have positive correlation. That is, the larger the number of consumers who purchase the product A, the larger the number of consumers who purchase the product C, and, the larger the number of consumers who purchase the product C, the larger the number of consumers who purchase the product A. In the case, the consumers who purchase the product A tend to purchase the product C together, and the effect of recommendation is expected in which the number of purchases for both the products increases by recommending the product A and the product C together. Here, in a case in which the product information output unit 118 recommends the product A to the consumers, the product information output unit 118 recommends the product C together with the product A.

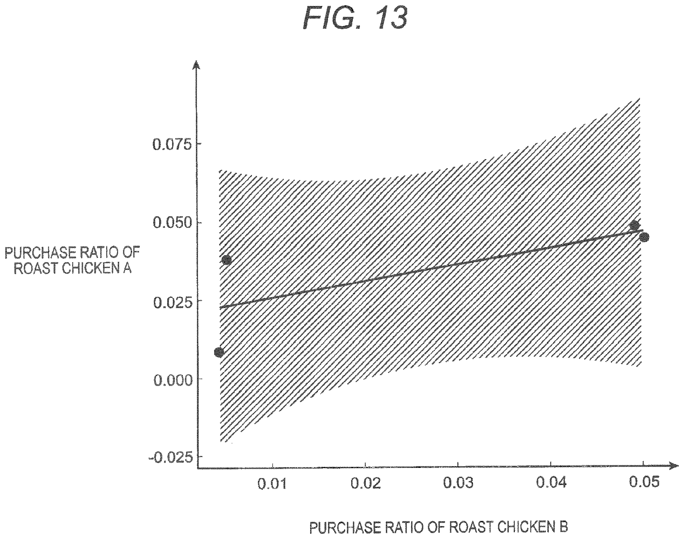

Fig. 13 is a graph illustrating a detailed example of two target products which have positive correlation between purchase ratios. In the graph illustrated in Fig. 13, a vertical axis indicates a purchase ratio of a roast chicken A, and a horizontal axis indicates a purchase ratio of a roast chicken B. As illustrated in the drawing, the purchase ratios of the two target products indicate positive correlation. That is, the larger the number of consumers who purchase the roast chicken A, the larger the number of consumers who purchase the roast chicken B, and, the larger the number of consumers who purchase the roast chicken B, the larger the number of consumers who purchase the roast chicken A. In the case, both the roast chicken A and the roast chicken B are recommended.

Meanwhile, similar to another example 2 of the procedure of selecting the target products, information of another product whose purchase ratio indicates positive correlation may be set in advance in each product. In the case, in a case in which the product information output unit 118 recommends one product, the product information output unit 118 can specify another product which indicates positive correlation for the purchase ratio of one product using the information which is set in advance, and can recommend one product and another product collectively.

In addition, here, a case, in which another product, which is recommended together with one product, is one, is described. However, in a case in which there are two or more another products which indicate positive correlation for the purchase ratio of one product, the product information output unit 118 may recommend two or more another products together with one product.

Furthermore, another example 2 and another example 3 of the procedure of selecting the target product are not limited to the case in which the target product is selected using the process illustrated in Fig. 6. The process in another example 2 or 3 of the procedure of selecting the target product may be performed independently. That is, in a case in which a product is recommended to the consumers, the product information output unit 118 may not recommend plural products which have negative correlation together as in the example 2 of the procedure of selecting the target product or may recommend plural products which have positive correlation together as in the example 3 of the procedure of selecting the target product.

### <Another Example of Hardware Configuration of Product Recommendation Device>

Meanwhile, a process of the product recommendation device 100 according to the exemplary embodiment may be realized in an image forming apparatus which has a printing function. Here, a hardware configuration is described while it is assumed that the process of the product recommendation device 100 is realized by the image forming apparatus.

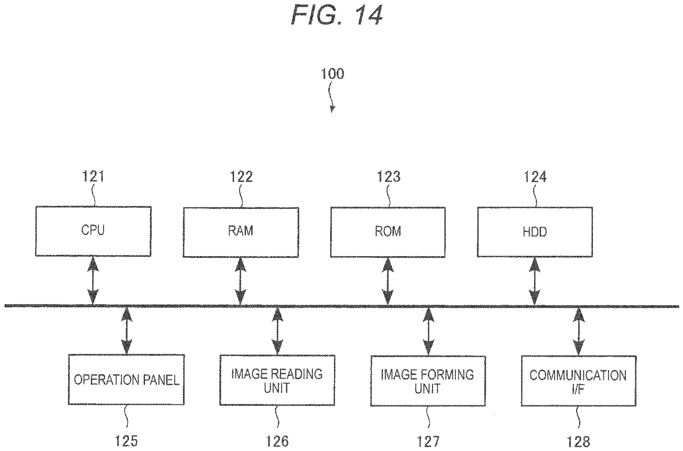

Fig. 14 is a diagram illustrating an example of a hardware configuration of an image forming apparatus to which the exemplary embodiment can be applied.

As illustrated in the drawing, the product recommendation device 100 includes a Central Processing Unit (CPU) 121, a Random Access Memory (RAM) 122, a Read Only Memory (ROM) 123, a Hard Disk Drive (HDD) 124, an operation panel 125, an image reading unit 126, an image forming unit 127, and a communication interface (hereinafter, written as "communication I/F") 128.

The CPU 121 realizes each of the functional units, which form the product recommendation device 100 illustrated in Fig. 2, by plotting and executing the various programs, which are stored in the ROM 123 and the like, to the RAM 122.

The RAM 122 is a memory which is used as a working memory of the CPU 121.

The ROM 123 is a memory which stores the various programs and the like which are executed by the CPU 121.

The HDD 124 is, for example, a magnetic disk device which stores image data, which is read by the image reading unit 126, image data, which is used to form an image in the image forming unit 127, and the like.

The operation panel 125 is, for example, a touch panel which displays various pieces of information and receives operation input from the user.

The image reading unit 126 reads an image which is recorded on a recording material such as paper. Here, the image reading unit 126 is, for example, a scanner, and may use a Charge Coupled Device (CCD) method of reducing reflection light for light, which is irradiated to an original document from a light source, by lenses and receiving the reflection light using CCDs or a Contact Image Sensor (CIS) method of receiving reflection light for light, which is irradiated to an original document from a LED light source.

The image forming unit 127 is a print mechanism which forms an image on a recording material such as paper. Here, the image forming unit 127 may be, for example, a printer, and may use an electrophotographic process for forming an image by transferring toner which is attached to a photosensitive body to the recording material or an ink jet method for forming an image by discharging ink on the recording material.

The communication I/F 128 functions as a communication interface which transmits and receives various data to and from another device through a network which is not illustrated in the drawing.

As described above, in a case in which the process of the product recommendation device 100 is realized by the image forming apparatus, the product information output unit 118 may form pieces of information relevant to the target product on the paper and may output the information. In this case, the product information output unit 118 is realized by the image forming unit 127.

Moreover, as the pieces of information relevant to the target product, for example, pieces of information including a product name, product explanation, a product price, a product image, and the like are formed on the paper and are output. In a case in which the paper on which the pieces of information relevant to the target product are formed is directly distributed to, for example, consumers as advertisement, distributed as inserted advertisement for newspaper, or directly displayed at the storefront, the product is recommended to the consumers.

Here, in a case in which plural products are recommended to common consumers as in the examples 1 and 3 of the procedure of selecting the target product, the color of the image may be changed for each product or a ratio of space within the paper may be changed for each product. For example, the product information output unit 118 may output pieces of information by coloring the pieces of information of a product, in which a gross profit and a profit ratio is the largest, from among plural products, and causing the pieces of information of the other products to be colored with black and white.

In addition, the function of the product recommendation device 100 may be realized by dividing the function into plural devices. For example, the functions of the sales history storage unit 111, the product information storage unit 112, the consumer information storage unit 113, the target product selection unit 114, the purchase number counting unit 115, the correlation calculation unit 116, and the consumer selection unit 117 may be realized by the computer apparatus illustrated in Fig. 1, and the function of the product information output unit 118 may be realized by the image forming apparatus illustrated in Fig. 14. In this case, it is possible to understand the computer apparatus and the image forming apparatus as an example of the product recommendation system.

In addition, in the exemplary embodiment, the purchase number counting unit 115 extracts the recommended consumers and the non-recommended consumers without taking the degrees of preference of the respective consumers into consideration. However, the present invention is not limited to the configuration. For example, after the degrees of preference of the respective consumers are calculated in advance, and the recommended consumers and the non-recommended consumers may be extracted according to values of the degrees of preference. More specifically, for example, purchase number counting unit 115 may extract the recommended consumers and the non-recommended consumers such that consumers, including a consumer whose degree of preference is low and a consumer whose degree of preference is high, exist based on the degrees of preference which are calculated in advance.

Furthermore, in the exemplary embodiment, after the target product is recommended to the customers in advance using the existing method, the recommended consumers and the non-recommended consumers are extracted. However, the present invention is not limited to the configuration. For example, candidates of the recommended consumers and the non-recommended consumers are previously extracted, and recommendation may not be performed in advance on the extracted candidates of the non-recommended consumers and recommendation may be performed in advance on the extracted candidates of the recommended consumers using the existing method.

In addition, in the exemplary embodiment, the product information output unit 118 outputs the pieces of information of the target product to the selected consumers. However, for example, in a case in which there is another product which is similar to the target product, pieces of information of another product may be output to the selected consumers.

Furthermore, in the above-described example, the product recommendation device 100 according to the exemplary embodiment determines the target product and selects consumers to which the target product is recommended. However, the product recommendation device 100 may determine a consumer (hereinafter, referred to as a target consumer) who is a target of recommendation of the product, and may select a product which should be recommended to the target consumer.

In this case, the target consumer is determined by, for example, the operational input of the user. In addition, plural products are recommended in advance using the existing method, and the consumer selection unit 117 calculates the relationship between the degree of preference and the improvement degree of the number of purchases as illustrated in Fig. 5 with regard to each of the products which are recommended in advance. Furthermore, the consumer selection unit 117 extracts a product, in which the degree of preference of the target consumer is near to the maximum improvement degree of the number of purchases, from among plural products. Here, it is possible to understand the extracted product as an example of a product in which the degree of influence due to recommendation in a case in which the product is recommended to the target consumer satisfies the predetermined condition. Furthermore, the product information output unit 118 recommends the extracted product to the target consumer.

Meanwhile, it is possible to provide a program, which realizes the exemplary embodiment of the present invention, by a communication unit, and it is possible to provide the program after storing the program in a recording medium such as a CD-ROM.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

## Claims

1. A program causing a computer to execute a process comprising:
extracting a consumer, from among plural consumers, whose degree of being influenced by recommendation for a specific product satisfies a predetermined condition; and
recommending the specific product to the extracted consumer.

2. The program according to Claim 1,
wherein the process further comprising
calculating the degree of being influenced based on a difference between a number of purchase of the specific product performed by consumers to which the specific product is recommended and the number of purchases of the specific product performed by consumers to which the specific product is not recommended.

3. The program according to Claim 1 or 2,
wherein the recommending includes, in a case where a correlation between the specific product and other product satisfies a predetermined condition, recommending the other product together with the specific product to the extracted consumer.

4. The program according to Claim 1 or 2,
wherein the extracting includes extracting a consumer for each product, and
the recommending includes, in a case where a common consumer is extracted for plural products, recommending the plural products to the extracted common consumer.

5. The program according to Claim 4,
wherein the recommending includes, in a case where a common consumer is extracted for plural products among which a correlation satisfies a predetermined condition, recommending a part of the plural products to the extracted common consumer.

6. A program causing a computer to execute a process comprising:
extracting a product, from among plural products, for which a degree of influence of recommendation to a specific consumer satisfies a predetermined condition; and
recommending the extracted product to the specific consumer.

7. A product recommendation system comprising:
an extraction unit that extracts a consumer, from among plural consumers, whose degree of being influenced by recommendation for a specific product satisfies a predetermined condition; and
a recommendation unit that recommends the specific product to the extracted consumer.

8. The product recommendation system according to Claim 7,
wherein the recommendation unit recommends the specific product by forming an image concerning the specific product on a recording material as an output.

9. A product recommendation method comprising:
extracting a consumer, from among plural consumers, whose degree of being influenced by recommendation for a specific product satisfies a predetermined condition; and
recommending the specific product to the extracted consumer.
